# EUROPEAN PATENT SPECIFICATION

(11) **EP 3 136 689 B1**
(45) Date of publication and mention of the grant of the patent: **07.02.2018**
(21) Application number: 16159838.8
(22) Date of filing: 11.03.2016
(51) Int. Cl.: H04L 29/08, G06F 9/445, H04L 12/28, H04W 4/02

(54) **METHOD AND APPARATUS FOR ACCESSING SERVER**
VERFAHREN UND VORRICHTUNG FÜR DEN ZUGRIFF AUF EINEN SERVER
PROCÉDÉ ET APPAREIL POUR ACCÉDER À UN SERVEUR

(30) Priority: 31.08.2015 CN 201510549907
(43) Date of publication of application: 01.03.2017
(73) Proprietor: Xiaomi Inc., Beijing 100085 (CN)
(72) Inventor: CHEN, Hong, Haidian District Bejing 100085 (CN); ZHANG, Yanlu, Haidian District Bejing 100085 (CN); HOU, Enxing, Haidian District Bejing 100085 (CN)
(74) Representative: Loustalan, Paul William

(56) References cited:
- EP-A1- 2 296 344
- EP-A1- 2 741 464
- WO-A2-2009/012992
- US-A1- 2003 212 684
- US-A1- 2008 215 758

## Description

### FIELD

The present disclosure relates to the smart home field, and more particularly, to a method for accessing a server and an apparatus for accessing a server.

### BACKGROUND

Many intelligent devices in the smart home may be controlled and managed by a server. Correspondingly, they need to access a network-side server when these intelligent devices access a network.

In the related art, manufacturers may burn an address of a default access server of the intelligent device to a chip of a communication module of the intelligent device when assembling the intelligent device. The intelligent device may access the server directly according to the address of the server burned in the chip of the communication module when being installed and accessing the network. EP 2 741 464 A1 discloses a system to synchronise the installed applications between a plurality of devices. A first device generates a first list of installed applications including the software version and transmits the list to a server. The server generates a second list of applications based on the first list. The second list is sent to a second device, wherein the second device may be an extension or peripheral of the first device. On receiving the second list the second device connects to a market server to download and install the necessary applications. WO 2009/012992 A2 discloses a requester-aware domain name system. The system enables a client to initiate a request for access to a network site, and for a DNS to resolve the request based on an attribute of the client. EP 2 296 344 A1 discloses a similar system which enables a mobile communication terminal to access an external site in dependence on their location. US 2003/0212684 A1 discloses a yet further similar system which enables an electronic device to be provided with a modified configuration in dependence on a changed external circumstance.

### SUMMARY

Embodiments of the present disclosure provide a method for accessing a server and an apparatus for assessing a server. The technical solution is provided as follows.

According to a first aspect of embodiments of the present disclosure, there is provided a method performed by an intelligent device for assessing a server according to claim 1. Alternatively, the method further includes:
obtaining a second version of the designated software installed in a second smart phone upon the first smart phone being switched to the second smart phone after accessing the server, and determining the second version of the designated software installed in the second smart phone as a second access indication message to indicate a geographic region of operation of the second smart phone, wherein said second smart phone is a control terminal of the intelligent device;
determining a new server to be switched into according to the second access indication message; and
switching and accessing to the new server.

Alternatively, the method further includes:
executing the step of determining a new server to be switched into according to the second access indication message, if a geographic region to which the new server belongs is not consistent with the geographic region to which the default access server belongs.

Alternatively, obtaining a first access indication message includes:
obtaining a current geographic location and determining the current geographic location as the first access indication message;
   determining the default access server according to the geographic region indicated by the first access indication message includes:
      determining the default access server according to the geographic location.

According to a second aspect of embodiments of the present disclosure, there is provided an apparatus for assessing a server according to claim 5.

Alternatively, the apparatus further includes:
a second indication message obtaining module configured to obtain a second version of the designated software installed in a second smart phone when the first smart phone is switched to the second smart phone after the accessing module accesses the server, and to determine the second version of the designated software installed in the second smart phone as a second access indication message to indicate a geographic region of operation of the second smart phone;
a second server determining module configured to determine a new server to be switched into according to the second access indication message obtained by the second indication message obtaining module; and
a switching module configured to switch and access to the new server determined by the second server determining module.

Alternatively, the second server determining module is configured to execute a step of determining the new server to be switched into according to the second access indication message, if a geographic region to which the new server belongs is not consistent with the geographic region to which the default access server belongs.

Alternatively, the first indication message obtaining module includes:
a second obtaining sub-module configured to obtain a current geographic location and to determine the current geographic location as the first access indication message;
the first server determining module includes:
   a second determining sub-module configured to determine the default access server according to the geographic location obtained by the second obtaining sub-module.

According to a third aspect of embodiments of the present disclosure, there is provided a non-transitory computer-readable storage medium according to claim 9 having stored therein instructions that, when executed by a processor of a device, causes the device to perform the method for accessing a server according to the first aspect of embodiments of the present disclosure.

According to the embodiments of the present disclosure, the technical solution may have the following advantageous effects.

By obtaining the first access indication message for indicating the geographic region to which the default access server belongs, determining the default access server according to the geographic region indicated by the first access indication message, and accessing the default access server, the server in the corresponding geographic region is selected as the default access server when accessing the network, thus guaranteeing a communication speech and control effects with the server and improving a user experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating an implementation environment involved in a method for accessing a server according to some exemplary embodiments of the present disclosure.
Fig. 2 is a flow chart showing a method for accessing a server according to an exemplary embodiment.
Fig. 3 is a flow chart showing a method for accessing a server according to another exemplary embodiment.
Fig. 4 is a flow chart showing a method for accessing a server according to another exemplary embodiment.
Fig. 5 is a block diagram showing an apparatus for accessing a server according to an exemplary embodiment.
Fig. 6 is a block diagram showing an apparatus for accessing a server according to another exemplary embodiment.
Fig. 7 is a block diagram showing an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

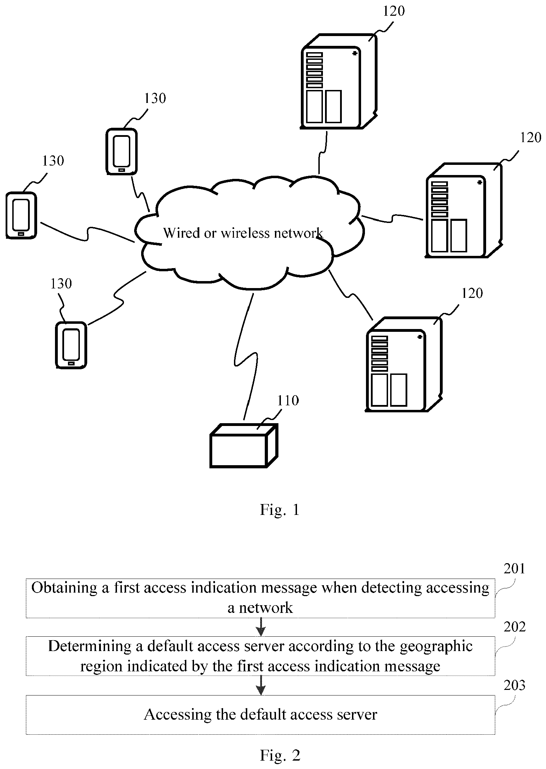

Fig. 1 is a schematic diagram illustrating an implementation environment involved in a method for accessing a server according to some exemplary embodiments of the present disclosure. The implementation environment includes an intelligent device 110 and at least one server 120.

The intelligent device 110 may be a smart home device, such as a smart television, an intelligent air conditioner, an intelligent router, a smart camera and an intelligent rice cooker.

The server 120 may be a server, a service cluster consisting of several servers, or a cloud computing service center.

The intelligent device 110 and the server 120 are connected via a wired or wireless network.

The implementation environment further includes at least one control terminal 130. The control terminal 130 may be an intelligent mobile terminal, such as a smart phone, a tablet computer and an e-book reader; or may be an intelligent wearable device, such as a smart watch or a pair of smart glasses; or may be a personal computer or a remote controller of the intelligent device 110.

The control terminal 130 and the server 120 are connected via a wired or wireless network. The control terminal 130 may obtain a working status of the intelligent device 110 via the server 120, or send a control instruction to the intelligent device 110 via the server 120.

Fig. 2 is a flow chart showing a method for accessing a server according to an exemplary embodiment. The method for accessing the server is applied to the intelligent device 110 or the control terminal 130 in the implementation environment as shown in Fig. 1. As shown in Fig. 2, the method for accessing the server may include the following steps.

In step 201, a first access indication message is obtained when detecting accessing a network.

The first access indication message is used to indicate a geographic region to which a default access server accessed by the intelligent device belongs.

In step 202, the default access server is determined according to the geographic region indicated by the first access indication message.

In step 203, the default access server is accessed.

In conclusion, with the method for accessing the server according to the embodiments of the present disclosure, the first access indication message for indicating the geographic region to which the default access server accessed by the intelligent device belongs is obtained, the default access server accessed by the intelligent device is determined according to the first access indication message and the intelligent device is controlled to access the default access server, such that the server in the geographic region to which the intelligent device belongs is selected as the default access server of the intelligent device when the intelligent device accesses the network, thus guaranteeing the communication speech and the control effects between the intelligent device and the server and improving the user experience.

In the technical solution of the present disclosure, the first access indication message in the method shown in Fig. 1 may be used to indicate the corresponding geographic region of the control terminal of the intelligent device, or directly indicate the geographic region of the intelligent device. The following embodiments of the present disclosure will exemplify the two situations.

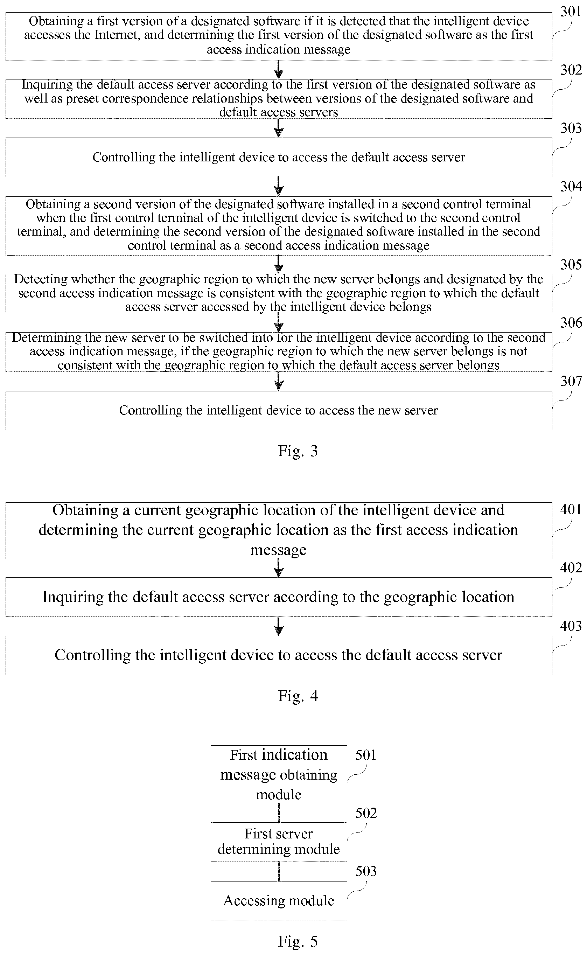

Fig. 3 is a flow chart showing a method for accessing a server according to another exemplary embodiment. The method for accessing the server is applied to the intelligent device 110 or the control terminal 130 in the implementation environment as shown in Fig. 1. As shown in Fig. 3, the method for accessing the server may include the following steps.

In step 301, a first version of a designated software is obtained if it is detected that the intelligent device accesses the network, and the first version of the designated software is determined as the first access indication message.

The designated software is installed in a first control terminal of the intelligent device.

A management software for managing the intelligent device may be installed in the control terminal of the intelligent device, and the management software is the above designated software. With the increase of countries or regions for sale of the intelligent device, the manufacturers may develop corresponding versions of the management software for different countries or regions, such that users in each country or region may download the corresponding version of the management software. When the control terminal installed with the management software is connected with the server, the control terminal may access the server corresponding to the country or region consistent with the version of the management software installed therein. For example, the users in China may download and install the management software in the Chinese version via the control terminal, and access the server in China when the control terminal is connected with the server; the user in America may download the management software in the American version via the control terminal, and access the server in America when the control terminal is connected with the server.

With the technical solution shown in the embodiment of the present disclosure, the software version of the management software installed in the control terminal of the intelligent device is used to indicate the geographic region to which the default access server accessed by the intelligent device belongs. For instance, when the management software is the Chinese version, the geographic region to which the default access server accessed by the intelligent device belongs is the Chinese region; when the management software is in the American version, the geographic region to which the default access server accessed by the intelligent device is the American region.

In step 302, the default access server is determined according to the first version of the designated software as well as preset correspondence relationships between versions of the designated software and default access servers.

It is possible to determine the default access server according to the first version of the designated software, when the default access server is determined according to the geographic region indicated by the first access indication message.

The intelligent device accesses the network and establishes connection with the server by a built-in communication module. With the technical solution shown in the embodiment of the present disclosure, the manufactures may develop a unified firmware for the communication module of the intelligent device for sale in all the countries or regions, and the firmware stores the correspondence relationship between each software version and each server. When the intelligent device accesses the network, it is possible to obtain the version of the control software installed in the control terminal, to determine the server corresponding to the version of the control software installed in the control terminal according to the correspondence relationship stored in the firmware, and to determine the server as the default access server.

Or the correspondence relationship between each software version and each server may be stored in the control terminal. When the intelligent device is controlled to access network by the control terminal, the management software installed in the control terminal determines the corresponding server according to its own software version, and sets the determined server as the default access server accessed by the intelligent device.

In step 303, the intelligent device is controlled to access the default access server.

After the default access server is determined, the intelligent device may access the determined server by itself or under control of the control terminal.

In step 304, a second version of the designated software installed in a second control terminal is obtained when the first control terminal of the intelligent device is switched to the second control terminal, and the second version of the designated software installed in the second control terminal is determined as a second access indication message.

In step 305, it is detected whether the geographic region to which the new server belongs and designated by the second access indication message is consistent with the geographic region to which the default access server accessed by the intelligent device belongs.

In step 306, the new server to be switched into for the intelligent device is determined according to the second access indication message, if the geographic region to which the new server belongs is not consistent with the geographic region to which the default access server belongs.

In step 307, the intelligent device is controlled to access the new server.

In practical applications, there may be more than one control terminals for an intelligent device. For example, the owner of the intelligent device may share the control authority thereof with other users who may realize control of the intelligent device by using their respective control terminals. If a device-sharing user is located in a region different from the geographic region to which the access server accessed by the intelligent device belongs, the access server accessed by the control terminal of the device-sharing user may not be the same the access server accessed by the intelligent device. In such a case, communication data between the control terminal and the intelligent device needs to be forwarded among multiple servers during the control of the intelligent device by the control terminal of the device-sharing user, which affects the control effect and user experience.

Consequently, in the technical solution shown in the embodiment of the present disclosure, when it is detected that the first control terminal of the intelligent device is switched into the second control terminal, the version of the management software installed in the second control terminal is obtained first, and it is detected whether the geographic region indicated by the version of the management software installed in the second control terminal is consistent with the geographic region to which the current access server accessed by the intelligent device - if yes, no further processing is conducted and if not, it is necessary to determine a new server according to the geographic region indicated by the second version of the management software installed in the second control terminal and to control the intelligent device to switch to the new server.

For example, a certain smart camera is sold in several countries or regions including China and America, and the manufacturer sets at least one server respectively for each selling country or region. For instance, Mr. Wang in China mounts the smart camera, downloads and installs a control software of the Chinese version in a smart phone A. When the smart phone A is used to control the smart camera to access the network, the smart camera obtains the version of the control software installed in the smart phone A and finds that the default access server is a server a in the Chinese region according to the software version in the smart phone A. Thus, the smart camera accesses the determined server a. If Mr. Wang purchases a smart camera produced and sold in China, and gives it to his friend Mike who lives in America. Mike downloads and installs a control software of the American version in a smart phone B after he mounts the smart camera in America. When Mike uses the smart phone B to control the smart camera to access the network, the smart camera obtains the version of the control software installed in the smart phone B and finds that the default access server is a server b in the American region according to the software version in the smart phone B. Hence, the smart camera accesses the determined server b.

Later Mr. Wang wants to share the smart camera mounted in China with Mike, and hence sets the smart phone B as a share terminal. When Mike uses the smart phone B to control the smart camera mounted by Mr. Wang, the smart phone B becomes the control terminal of the smart camera mounted by Mr. Wang. At the moment, the smart camera mounted by Mr. Wang first obtains the version of the control software installed in the smart phone B and detects that the version is not the Chinese version but the American version, so the smart camera mounted by Mr. Wang queries and determines the server b in the American region as the server to be switched into according to the version of the control software installed in the smart phone B, and switches connection to the server b.

In the technical solution shown in the embodiment of the present disclosure, the intelligent device completes the following steps: obtaining the first access indication message, determining the default access server according to the first access indication message, and controlling the intelligent device to access the default access server. In the practical applications, all or part of the above steps may be completed by the control terminal of the intelligent device, and the realization process is similar to that shown in the above embodiment of the present disclosure, which will not be further elaborated.

In conclusion, with the method for accessing the server according to the embodiments of the present disclosure, the first access indication message for indicating the geographic region to which the default access server accessed by the intelligent device belongs is obtained, the default access server accessed by the intelligent device is determined according to the first access indication message, and the intelligent device is controlled to access the default access server, such that the server in the geographic region to which the intelligent device belongs is selected as the default access server of the intelligent device when the intelligent device accesses the network, thus guaranteeing the communication speech and the control effects between the intelligent device and the server and improving the user experience.

Fig. 4 is a flow chart showing a method for accessing a server according to another exemplary embodiment. The method for accessing the server is applied to the intelligent device 110 or the control terminal 130 in the implementation environment as shown in Fig. 1. As shown in Fig. 4, the method for accessing the server may include the following steps.

In step 401, a current geographic location of the intelligent device is obtained and the current geographic location is determined as the first access indication message.

In this embodiment of the present disclosure, the intelligent device or the control terminal of the intelligent device may directly obtain the geographic location of the intelligent device and take the geographic location as the first access indication message for selecting the default access server, in which the geographic location may represent the intelligent device itself or the control terminal of the intelligent device. The geographic location may be obtained by the following ways.

### 1) Satellite positioning

The intelligent device or the control terminal thereof may preset a satellite positioning function, such that it is possible to determine the geographic coordinates of the intelligent device or those of the control terminal of the intelligent device by satellite positioning (e.g. GPS or BeiDou Navigation Satellite System).

### 2) Geographic attribution of user's mobile phone number or area code of landline phone number

The intelligent device or the control terminal thereof may be connected with the mobile phone of the user or the landline phone, and obtain the geographic attribution of the mobile phone number or the area code of the landline phone number, such that the geographic location is determined according to the geographic attribution of the mobile phone number or the area code of the landline phone number, in which it is possible to directly obtain the geographic attribution of the mobile phone number when the control terminal is the smart phone.

### 3) Wi-Fi (wireless fidelity) hotspot positioning

Since a Wi-Fi hotspot (like a wireless router) covers a relatively small area and has a relatively fixed position, geographic locations of most Wi-Fi hotspots are recorded by the operator. The Wi-Fi hotspot may emit around a wireless signal upon being energized, and the wireless signal includes a unique ID of the Wi-Fi hotspot. When the intelligent device or the control terminal thereof has a built-in Wi-Fi function, the unique ID may be obtained as long as the wireless signal emitted by the Wi-Fi hotspot is received. The intelligent device or the control terminal thereof intercepts what Wi-Fi hotspots are nearby, checks the signal strength of each Wi-Fi hotspot, and sends the respective IDs and signal strength of these Wi-Fi hotspots to a designated server (like Skyhook server). The Skyhook server may determine the coordinates of each hotspot recorded in the database according to the ID and the signal strength thereof, compute and determine the coordinates of the intelligent device or the control terminal of the intelligent device, and send the coordinates determined by computation to the intelligent device or the control terminal of the intelligent device.

### 4) Base station positioning

Similar to Wi-Fi hotspot positioning, if the intelligent device or the control terminal thereof has a 2G, 3G or 4G function, the intelligent device or the control terminal thereof may scan ID and signal strength of surrounding wireless base stations, and send the respective IDs and the signal strength of the surrounding wireless base stations to the server of the operator. The server of the operator computes the coordinates of the intelligent device or the control terminal of the intelligent device according to the ID and the signal strength of the wireless base station, and sends the determined coordinates to the intelligent device or the control terminal thereof.

### 5) Common online delivery address or last delivery address

Usually a delivery address needs to be set for online shopping. The intelligent device or the control terminal thereof may be connected with a home network, obtains the common delivery address set by the user or the last delivery address from an electronic device (such as a smart phone, a tablet computer or a personal computer) for online shopping, and determines the geographic location according to the delivery address. When the control terminal is the smart phone for online shopping, the smart phone may directly obtain the delivery address set by the user.

### 6) IP positioning

When accessing the network, the intelligent device or the control terminal thereof usually obtains an IP address which is distributed according to different regions, and then may determine the geographic location according to the IP address of the access network.

### 7) Geographic location and post code input by users during registration

For example, if an intelligent device is mounted and registered in a server, it is possible to prompt the user to input the geographic location or the post code, such that the intelligent device or the control terminal thereof may determine the corresponding geographic location according to the geographic location or the post code input by the user.

Moreover, the user may input the geographic location and the post code which are used to obtain the geographic location, during registration of other devices or accounts (like Mi Account).

### 8) Scenery, buildings or landmarks displayed in recent mobile photos

The intelligent device or the control terminal thereof may be connected with the smart phone via the home network, obtain the recent photos shot by the smart phone, and analyze the geographic location of the photos based on the scenery, buildings or landmarks in the photos. When the control terminal is the smart phone, it is possible to directly obtain the photos in the smart phone and analyze the geographic location.

In step 402, the default access server is determined according to the geographic location.

It is possible to determine the default access server according to the geographic location during determination of the default access server according to the geographic region indicated by the first access indication message.

With the technical solution shown in the embodiment of the present disclosure, the manufactures may develop a unified firmware for the communication module of the intelligent device for sale in all the countries or regions, and the firmware stores the correspondence relationship between each country or region and each server. When the intelligent device accesses the network, it is possible to obtain the geographic location of the intelligent device, to determine the country or region according to the geographic location, to determine the corresponding server of the country or region according to the correspondence relationship stored in the firmware, and to determine the server as the default access server.

Or the correspondence relationship between each country or region and each server may be stored in the control terminal. When the intelligent device is controlled to access the network by the control terminal, the management software installed in the control terminal determines the corresponding country or region according to the geographic location of the intelligent device, determines the server corresponding to the country or region according to the correspondence relationship stored in the firmware, and sets the determined server as the default access server accessed by the intelligent device.

In step 403, the intelligent device is controlled to access the default access server.

In conclusion, with the method for accessing the server according to the embodiments of the present disclosure, the first access indication message for indicating the geographic region to which the default access server accessed by the intelligent device belongs is obtained, the default access server of the intelligent device is determined according to the first access indication message, and the intelligent device is controlled to access the default access server, and then the server in the geographic region to which the intelligent device belongs is selected as the default access server accessed by the intelligent device when the intelligent device accesses the network, thus guaranteeing the communication speech and the control effects between the intelligent device and the server and improving the user experience.

An apparatus embodiment of the present disclosure in the following may be used to execute the method embodiment of the present disclosure. As for undisclosed details of the apparatus embodiment of the present disclosure, reference may be made to the method embodiment of the present disclosure.

Fig. 5 is a block diagram showing an apparatus for accessing a server according to an exemplary embodiment. The apparatus for accessing the server may be used in the intelligent device 110 or the control terminal 130 in the implementation environment as shown in Fig. 1 to execute all or part of the steps of the method shown in any one of Fig. 2 to Fig. 4. As shown in Fig. 5, the apparatus for accessing the server may include but not be limited to a first indication message obtaining module 501, a first server determining module 502 and an accessing module 503.

The first indication message obtaining module 501 is configured to obtain a first access indication message for indicating a geographic region to which a default access server belongs, when detecting accessing a network.

The first server determining module 502 is configured to determine the default access server according to the geographic region indicated by the first access indication message obtained by the first indication message obtaining module 501.

The accessing module 503 is configured to access the default access server determined by the first server determining module 502.

In conclusion, with the apparatus for accessing the server according to the embodiments of the present disclosure, by obtaining the first access indication message for indicating the geographic region to which the default access server belongs, determining the default access server according to the geographic region indicated by the first access indication message, and accessing the default access server, the server in the corresponding geographic region is selected as the default access server accessed by the intelligent device when the intelligent device accesses network, thus guaranteeing the communication speech and the control effects of the server and improving the user experience.

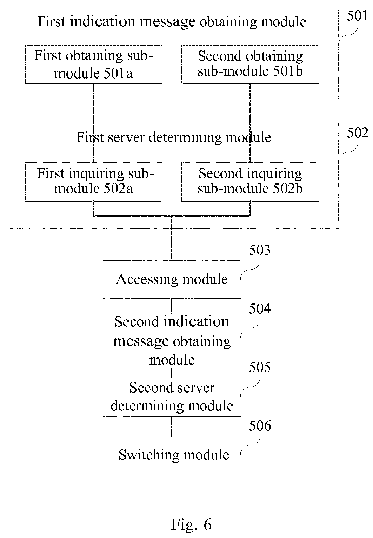

Fig. 6 is a block diagram of an apparatus for accessing a server according to another exemplary embodiment. The apparatus for accessing the server may be used in the intelligent device 110 or the control terminal 130 in the implementation environment as shown in Fig. 1 to execute all or part of the steps of the method shown in any one of Fig. 2 to Fig. 4. As shown in Fig. 6, the apparatus may include but not be limited to a first indication message obtaining module 501, a first server determining module 502 and an accessing module 503.

The first indication message obtaining module 501 is configured to obtain a first access indication message for indicating a geographic region to which a default access server belongs, when detecting accessing a network.

The first server determining module 502 is configured to determine the default access server according to the geographic region indicated by the first access indication message obtained by the first indication message obtaining module 501.

The accessing module 503 is configured to access the default access server determined by the first server determining module 502.

Alternatively, the first indication message obtaining module 501 includes a first obtaining sub-module 501a that is configured to obtain a first version of a designated software installed in a first control terminal and determine the first version of the designated software as the first access indication message.

The first server determining module 502 includes a first determining sub-module 502a that is configured to determine the default access server according to the first version of the designated software obtained by the first obtaining sub-module 501a as well as preset correspondence relationships between versions of the designated software and default access servers.

Alternatively, the apparatus further includes: a second indication message obtaining module 504, a second server determining module 505 and a switching module 506.

The second indication message obtaining module 504 is configured to obtain a second version of the designated software installed in a second control terminal when the first control terminal is switched to the second control terminal after the accessing module 503 accesses the server, and to determine the second version of the designated software installed in the second control terminal as a second access indication message of the intelligent device.

The second server determining module 505 is configured to determine a new server to be switched into according to the second access indication message obtained by the second indication message obtaining module 504.

The switching module 506 is configured to switch access to the new server determined by the second server determining module 505.

Alternatively, the second server determining module 505 is configured to execute a step of determining the new server to be switched into according to the second access indication message, if the geographic region to which the new server belongs is not consistent with the geographic region to which the default access server belongs.

Alternatively, the first indication message obtaining module 501 includes a second obtaining sub-module 501b that is configured to obtain a current geographic location and to determine the current geographic location as the first access indication message.

The first server determining module 502 includes a second determining sub-module 502b that is configured to determine the default access server according to the geographic location obtained by the second obtaining sub-module 501b.

In conclusion, with the apparatus for accessing the server according to the embodiments of the present disclosure, the first access indication message for indicating the geographic region to which the default access server accessed by the intelligent device belongs is obtained, the default access server of the intelligent device is determined according to the first access indication message, and the intelligent device is controlled to access the default access server, such that thus the server in the geographic region to which the intelligent device belongs is selected as the default access server of the intelligent device when the intelligent device accesses the network, thus guaranteeing the communication speech and the control effects between the intelligent device and the server and improving the user experience.

A device for accessing a server is provided by an embodiment of the present disclosure. The device includes:
a processor and
a memory configured to store an instruction executable by the processor,
in which the processor is configured to:
   obtain a first access indication message for indicating a geographic region to which a default access server belongs, when detecting accessing a network;
   determine the default access server according to the geographic region indicated by the first access indication message; and
   access the default access server.

Alternatively, obtaining an access indication message of the intelligent device includes:
obtaining a first version of a designated software installed in a first control terminal and determining the first version of the designated software as the first access indication message;
determining the default access server according to the geographic region indicated by the first access indication message includes:
   determining the default access server according to the first version of the designated software as well as preset correspondence relationships between versions of the designated software and default access servers.

Alternatively, the method further includes:
obtaining a second version of the designated software installed in a second control terminal when the first control terminal is switched to the second control terminal after accessing the server, and determining the second version of the designated software installed in the second control terminal as a second access indication message;
determining a new server to be switched into according to the second access indication message; and
switching access to the new server.

Alternatively, the method further includes:
executing the step of determining a new server to be switched into according to the second access indication message, if a geographic region to which the new server belongs is not consistent with the geographic region to which the default access server belongs.

Alternatively, obtaining a first access indication message includes:
obtaining a current geographic location and determining the current geographic location as the first access indication message;
determining the default access server according to the geographic region indicated by the first access indication message includes:
   determining the default access server according to the geographic location.

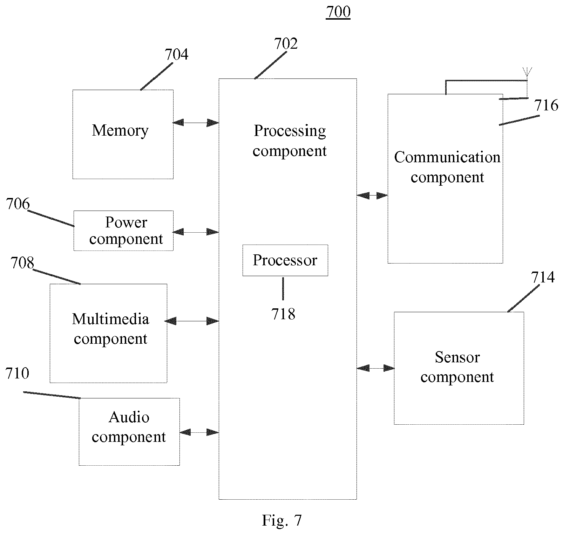

Fig. 7 is a block diagram showing an apparatus 700 according to an exemplary embodiment. For example, the apparatus 700 may be an intelligent device, such as a smart television, an intelligent air conditioner, an intelligent router, a smart camera and an intelligent rice cooker; or may be a control terminal of an intelligent device, such as a smart phone, a tablet computer, an e-book reader, a smart watch, a pair of smart glasses, a personal computer or a remote control.

Referring to Fig. 7, the apparatus 700 may include one or more of the following components: a processing component 702, a memory 704, a power component 706, a multimedia component 708, an audio component 710, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 704 may further store one or more modules that are configrued to be executed by the one or more processors 718 to perform all or part of the steps in the above method described in any one of Fig. 2 to Fig. 4.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The sensor component 714 includes one or more sensors to provide status assessments of various aspects of the device 700. For instance, the sensor component 714 may detect an open/closed status of the device 700, relative positioning of components, a change in position of the device 700 or a component of the device 700, and a change in temperature of the device 700. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 710 in the apparatus 700, for performing the above-described methods. For example, the non-transitory computer-readable storage medium may be a ROM, a RAM, a CD-ROM, a magnetic tape, a floppy disc, an optical data storage device, and the like.

With respect to the apparatuses in the above embodiments, the specific manners for performing operations for individual modules therein have been described in detail in the embodiments regarding the methods for accessing a server, which will not be elaborated herein.

## Claims

1. A method performed by an intelligent device for accessing a server, comprising:
obtaining a first access indication message indicating a geographic region to which a default access server belongs, upon detecting accessing a network (201), comprising:
obtaining a first version of a designated software installed in a first smart phone, and
determining the first version of the designated software as the first access indication message (301) to indicate a geographic region of operation of the first smart phone,
wherein said first smart phone is a control terminal of the intelligent device;
determining the default access server according to the geographic region indicated by the first access indication message (202), comprising:
determining the default access server according to the first version of the designated software as well as preset correspondence relationships between versions of the designated software and default access servers (302), wherein said preset correspondence relationships between versions of the designated software and default access servers are stored in a unified firmware of the intelligent device; and
accessing the default access server (203).

2. The method according to claim 1, further comprising:
obtaining a second version of the designated software installed in a second smart phone, upon the first smart phone being switched to the second smart phone after accessing the server, and determining the second version of the designated software installed in the second smart phone as a second access indication message (304) to indicate a geographic region of operation of the second smart phone, wherein said second smart phone is a control terminal of the intelligent device;
determining a new server to be switched into according to the second access indication message (306); and
switching and accessing to the new server (307).

3. The method according to claim 2, further comprising:
executing the step of determining a new server to be switched into according to the second access indication message (306), if a geographic region to which the new server belongs is not consistent with the geographic region to which the default access server belongs.

4. The method according to any one of claims 1 to 3, wherein obtaining a first access indication message (201) comprises:
obtaining a current geographic location and determining the current geographic location as the first access indication message (401);
wherein determining the default access server according to the geographic region indicated by the first access indication message (202) comprises:
determining the default access server according to the geographic location (402).

5. An apparatus for accessing a server, comprising:
a first indication message obtaining module (501) configured to obtain a first access indication message indicating a geographic region to which a default access server belongs, when detecting accessing a network, comprising:
a first obtaining sub-module (501a) configured to obtain a first version of a designated software installed in a first smart phone and to determine the first version of the designated software as the first access indication message to indicate a geographic region of operation of the first smart phone, wherein said first smart phone is a control terminal of the apparatus;
a first server determining module (502) configured to determine the default access server according to the geographic region indicated by the first access indication message obtained by the first indication message obtaining module (501), comprising:
a first determining sub-module (502a) configured to determine the default access server according to the first version of the designated software obtained by the first obtaining sub-module (501a) as well as preset correspondence relationships between versions of the designated software and default access servers, wherein said preset correspondence relationships between versions of the designated software and default access servers are stored in a unified firmware of the apparatus; and
an accessing module (503) configured to access the default access server determined by the first server determining module (502).

6. The apparatus according to claim 5, further comprising:
a second indication message obtaining module (504) configured to obtain a second version of the designated software installed in a second smart phone upon the first smart phone being switched to the second smart phone after the accessing module accesses the server, and to determine the second version of the designated software installed in the second smart phone as a second access indication message, to indicate a geographic region of operation of the second smart phone, wherein said second smart phone is a control terminal of the apparatus; a second server determining module (505) configured to determine a new server to be switched into according to the second access indication message obtained by the second indication message obtaining module (504); and
a switching module (506) configured to switch and access to the new server determined by the second server determining module (505).

7. The apparatus according to claim 6, wherein the second server determining module (505) is configured to execute a step of determining the new server to be switched into according to the second access indication message, if a geographic region to which the new server belongs is not consistent with the geographic region to which the default access server belongs.

8. The apparatus according to any one of claims 5 to 7, wherein the first indication message obtaining module (501) comprises:
a second obtaining sub-module (501b) configured to obtain a current geographic location and to determine the current geographic location as the first access indication message;
wherein the first server determining module (502) comprises:
a second determining sub-module (502b) configured to determine the default access server according to the geographic location obtained by the second obtaining sub-module (501b).

9. A non-transitory computer-readable storage medium having stored therein instructions that, when executed by a processor of a device, causes the device to perform the method for accessing a server according to any of claims 1 to 4.

## Patentansprüche

1. Verfahren, ausgeführt von einem intelligenten Gerät zum Zugreifen auf einen Server, das Folgendes beinhaltet:
Einholen einer ersten Zugangsanzeigenachricht, die eine geografische Region anzeigt, zu der ein Vorgabezugangsserver gehört, nach dem Erkennen eines Zugriffs auf ein Netzwerk (201), das Folgendes beinhaltet:
Einholen einer ersten Version einer in einem ersten Smartphone installierten designierten Software, und
Bestimmen der ersten Version der designierten Software als die erste Zugangsanzeigenachricht (301) zum Anzeigen einer geografischen Betriebsregion des ersten Smartphone, wobei das genannte erste Smartphone ein Steuerterminal des intelligenten Geräts ist;
Bestimmen des Vorgabezugangsservers gemäß der von der ersten Zugangsanzeigenachricht (202) angezeigten geografischen Region, das Folgendes beinhaltet:
Bestimmen des Vorgabezugangsservers gemäß der ersten Version der designierten Software sowie voreingestellten Korrespondenzbeziehungen zwischen Versionen der designierten Software und von Vorgabezugangsservern (302), wobei die genannten voreingestellten Korrespondenzbeziehungen zwischen Versionen der designierten Software und Vorgabezugangsservern in einer vereinheitlichten Firmware des intelligenten Geräts gespeichert werden; und
Zugreifen auf den Vorgabezugangsserver (203).

2. Verfahren nach Anspruch 1, das ferner Folgendes beinhaltet:
Einholen einer zweiten Version der in einem zweiten Smartphone installierten designierten Software nach dem Umschalten des ersten Smartphone auf das zweite Smartphone nach dem Zugreifen auf den Server, und Bestimmen der zweiten Version der in dem zweiten Smartphone installierten designierten Software als zweite Zugangsanzeigenachricht (304) zum Anzeigen einer geografischen Betriebsregion des zweiten Smartphone, wobei das genannte zweite Smartphone ein Steuerterminal des intelligenten Geräts ist;
Bestimmen eines neuen Servers, auf den gemäß der zweiten Zugangsanzeigenachricht (306) umzuschalten ist; und
Umschalten und Zugreifen auf den neuen Server (307).

3. Verfahren nach Anspruch 2, das ferner Folgendes beinhaltet:
Ausführen des Schrittes des Bestimmens eines neuen Servers, auf den gemäß der zweiten Zugangsanzeigenachricht (306) umzuschalten ist, wenn eine geografische Region, zu der der neue Server gehört, nicht mit der geografischen Region im Einklang ist, zu der der Vorgabezugangsserver gehört.

4. Verfahren nach einem der Ansprüche 1 bis 3, wobei das Einholen einer ersten Zugangsanzeigenachricht (201) Folgendes beinhaltet:
Einholen eines aktuellen geografischen Orts und Bestimmen des aktuellen geografischen Orts als die erste Zugangsanzeigenachricht (401);
wobei das Bestimmen des Vorgabezugangsservers gemäß der von der ersten Zugangsanzeigenachricht (202) angezeigten geografischen Region Folgendes beinhaltet:
Bestimmen des Vorgabezugangsservers gemäß dem geografischen Ort (402).

5. Vorrichtung zum Zugreifen auf einen Server, die Folgendes umfasst:
ein erstes Anzeigenachrichteneinholmodul (501), konfiguriert zum Einholen einer ersten Zugangsanzeigenachricht, die eine geografische Region anzeigt, zu der ein Vorgabezugangsserver gehört, beim Erkennen des Zugriffs auf ein Netzwerk, das Folgendes umfasst:
ein erstes Einholsubmodul (501a), konfiguriert zum Einholen einer ersten Version einer in einem ersten Smartphone installierten designierten Software und zum Bestimmen der ersten Version der designierten Software als die erste Zugangsanzeigenachricht zum Anzeigen einer geografischen Betriebsregion des ersten Smartphone, wobei das genannte erste Smartphone ein Steuerterminal der Vorrichtung ist;
ein erstes Serverbestimmungsmodul (502), konfiguriert zum Bestimmen des Vorgabezugangsservers gemäß der geografischen Region, angezeigt durch die von dem ersten Anzeigenachrichteneinholmodul (501) erhaltene erste Zugangsanzeigenachricht, das Folgendes umfasst:
ein erstes Bestimmungssubmodul (502a), konfiguriert zum Bestimmen des Vorgabezugangsservers gemäß der ersten Version der von dem ersten Einholsubmodul (501a) eingeholten designierten Software sowie von voreingestellten Korrespondenzbeziehungen zwischen Versionen der designierten Software und von Vorgabezugangsservern, wobei die genannten voreingestellten Korrespondenzbeziehungen zwischen Versionen der designierten Software und Vorgabezugangsservern in einer vereinheitlichten Firmware der Vorrichtung gespeichert sind; und
ein Zugriffsmodul (502), konfiguriert zum Zugreifen auf den von dem ersten Serverbestimmungsmodul (502) bestimmten Vorgabezugangsserver.

6. Vorrichtung nach Anspruch 5, die ferner Folgendes umfasst:
ein zweites Anzeigenachrichteneinholmodul (504), konfiguriert zum Einholen einer zweiten Version der in dem zweiten Smartphone installierten designierten Software nach dem Umschalten des ersten Smartphone auf das zweite Smartphone, nachdem das Zugriffsmodul auf den Server zugegriffen hat, und zum Bestimmen der zweiten Version der in dem zweiten Smartphone installierten designierten Software als die zweite Zugangsanzeigenachricht, zum Anzeigen einer geografischen Betriebsregion des zweiten Smartphone, wobei das genannte zweite Smartphone ein Steuerterminal der Vorrichtung ist;
ein zweites Serverbestimmungsmodul (505), konfiguriert zum Bestimmen eines neuen Servers, auf den gemäß der von dem zweiten Anzeigenachrichteneinholmodul (504) eingeholten zweiten Zugangsanzeigenachricht umzuschalten ist; und
ein Schaltmodul (506), konfiguriert zum Schalten und Zugreifen auf den von dem zweiten Serverbestimmungsmodul (505) bestimmten neuen Server.

7. Vorrichtung nach Anspruch 6, wobei das zweite Serverbestimmungsmodul (505) zum Ausführen eines Schrittes zum Bestimmen des neuen Servers, auf den gemäß der zweiten Zugangsanzeigenachricht umgeschaltet werden soll, konfiguriert ist, wenn eine geografische Region, zu der der neue Server gehört, nicht mit der geografischen Region im Einklang ist, zu der der Vorgabezugangsserver gehört.

8. Vorrichtung nach einem der Ansprüche 5 bis 7, wobei das erste Anzeigenachrichteneinholmodul (501) Folgendes umfasst:
ein zweites Einholsubmodul (501b), konfiguriert zum Einholen eines aktuellen geografischen Orts und zum Bestimmen des aktuellen geografischen Orts als die erste Zugangsanzeigenachricht;
wobei das erste Serverbestimmungsmodul (502) Folgendes umfasst:
ein zweites Bestimmungssubmodul (502b), konfiguriert zum Bestimmen des Vorgabezugangsservers gemäß dem von dem zweiten Einholsubmodul (501b) eingeholten geografischen Ort.

9. Nichtflüchtiges computerlesbares Speichermedium, auf dem Befehle gespeichert sind, die bei Ausführung durch einen Prozessor eines Geräts bewirken, dass das Gerät das Verfahren zum Zugreifen auf einen Server nach einem der Ansprüche 1 bis 4 ausführt.

## Revendications

1. Procédé effectué par un dispositif intelligent pour accéder à un serveur, comprenant :
obtenir un premier message d'indication d'accès indiquant une région géographique à laquelle un serveur d'accès par défaut appartient, lors de la détection d'accès à un réseau (201), comprenant :
obtenir une première version d'un logiciel désigné installé dans un premier téléphone intelligent, et
déterminer la première version du logiciel désigné comme le premier message d'indication d'accès (301) pour indiquer une région géographique de fonctionnement du premier téléphone intelligent,
où ledit premier téléphone intelligent est un terminal de commande du dispositif intelligent ;
déterminer le serveur d'accès par défaut conformément à la région géographique indiquée par le premier message d'indication d'accès (202), comprenant :
déterminer le serveur d'accès par défaut conformément à la première version du logiciel désigné ainsi que des relations de correspondance préréglées entre des versions du logiciel désigné et des serveurs d'accès par défaut (302), où lesdites relations de correspondance préréglées entre des versions du logiciel désigné et des serveurs d'accès par défaut sont stockées dans un micro logiciel unifié du dispositif intelligent ; et
accéder au serveur d'accès par défaut (203).

2. Procédé selon la revendication 1, comprenant en outre :
obtenir une deuxième version du logiciel désigné installé dans un deuxième téléphone intelligent, lors de la commutation du premier téléphone intelligent au deuxième téléphone intelligent après avoir accédé au serveur, et déterminer la deuxième version du logiciel désigné installé dans le deuxième téléphone intelligent comme un deuxième message d'indication d'accès (304) pour indiquer une région géographique de fonctionnement du deuxième téléphone intelligent, où le deuxième téléphone intelligent est un terminal de commande du dispositif intelligent ;
déterminer un nouveau serveur auquel commuter conformément au deuxième message d'indication d'accès (306) ; et
commuter et accéder au nouveau serveur (307).

3. Procédé selon la revendication 2, comprenant en outre :
exécuter l'étape de détermination d'un nouveau serveur auquel commuter conformément au deuxième message d'indication d'accès (306), si une région géographique à laquelle le nouveau serveur appartient ne correspond pas à la région géographique à laquelle le serveur d'accès par défaut appartient.

4. Procédé selon l'une quelconque des revendications 1 à 3, dans lequel obtenir un premier message d'indication d'accès (201) comprend :
obtenir un emplacement géographique courant et déterminer l'emplacement géographique courant comme le premier message d'indication d'accès (401) ;
dans lequel déterminer le serveur d'accès par défaut conformément à la région géographique indiquée par le premier message d'indication d'accès (202) comprend :
déterminer le serveur d'accès par défaut conformément à l'emplacement géographique (402).

5. Appareil pour accéder à un serveur, comprenant :
un premier module d'obtention de message d'indication (501) configuré pour obtenir un premier message d'indication d'accès indiquant une région géographique à laquelle un serveur d'accès par défaut appartient, en détectant l'accès à un réseau, comprenant :
un premier sous-module d'obtention (501a) configuré pour obtenir une première version d'un logiciel désigné installé dans un premier téléphone intelligent et pour déterminer la première version du logiciel désigné comme le premier message d'indication d'accès pour indiquer une région géographique de fonctionnement du premier téléphone intelligent, où ledit premier téléphone intelligent est un terminal de commande de l'appareil ;
un premier module de détermination de serveur (502) configuré pour déterminer le serveur d'accès par défaut conformément à la région géographique indiquée par le premier message d'indication d'accès obtenu par le premier module d'obtention de message d'indication (501), comprenant :
un premier sous-module de détermination (502a) configuré pour déterminer le serveur d'accès par défaut conformément à la première version du logiciel désigné obtenue par le premier sous-module d'obtention (501a) ainsi que des relations de correspondance préréglées entre des versions du logiciel désigné et des serveurs d'accès par défaut, où lesdites relations de correspondance préréglées entre des versions du logiciel désigné et des serveurs d'accès par défaut sont stockées dans un micro logiciel unifié de l'appareil ; et
un module d'accès (503) configuré pour accéder au serveur d'accès par défaut déterminé par le premier module de détermination de serveur (502).

6. Appareil selon la revendication 5, comprenant en outre :
un deuxième module d'obtention de message d'indication (504) configuré pour obtenir une deuxième version du logiciel désigné installé dans un deuxième téléphone intelligent lors de la commutation du premier téléphone intelligent au deuxième téléphone intelligent après que le module d'accès accède au serveur, et pour déterminer la deuxième version du logiciel désigné installé dans le deuxième téléphone intelligent comme un deuxième message d'indication d'accès, pour indiquer une région géographique de fonctionnement du deuxième téléphone intelligent, où ledit deuxième téléphone intelligent est un terminal de commande de l'appareil ;
un deuxième module de détermination de serveur (505) configuré pour déterminer un nouveau serveur auquel commuter conformément au deuxième message d'indication d'accès obtenu par le deuxième module d'obtention de message d'indication (504) ; et
un module de commutation (506) configuré pour commuter et accéder au nouveau serveur déterminé par le deuxième module de détermination de serveur (505).

7. Appareil selon la revendication 6, dans lequel le deuxième module de détermination de serveur (505) est configuré pour exécuter une étape de détermination du nouveau serveur auquel commuter conformément au deuxième message d'indication d'accès, si une région géographique à laquelle le nouveau serveur appartient ne correspond pas à la région géographique à laquelle le serveur d'accès par défaut appartient.

8. Appareil selon l'une quelconque des revendications 5 à 7, dans lequel le premier module d'obtention de message d'indication (501) comprend :
un deuxième sous-module d'obtention (501b) configuré pour obtenir un emplacement géographique courant et pour déterminer l'emplacement géographique courant comme le premier message d'indication d'accès ;
dans lequel le premier module de détermination de serveur (502) comprend :
un deuxième sous-module de détermination (502b) configuré pour déterminer le serveur d'accès par défaut conformément à l'emplacement géographique obtenu par le deuxième sous-module d'obtention (501b).

9. Support de stockage non transitoire lisible par ordinateur ayant des instructions stockées dessus qui, lorsque exécutées par un processeur d'un dispositif, font que le dispositif mette en oeuvre le procédé d'accès à un serveur selon l'une quelconque des revendications 1 à 4.
